**Europäisches Patentamt**

**European Patent Office**

**Office européen des brevets**

(11) Veröffentlichungsnummer: **0 131 116**

**A1**

# (12) EUROPÄISCHE PATENTANMELDUNG

(21) Anmeldenummer: **84105612.0**

(22) Anmeldetag: **17.05.84**

(51) Int. Cl.⁴: **C 02 F 1/04**

(30) Priorität: **09.06.83 CH 3178/83**

(43) Veröffentlichungstag der Anmeldung:
**16.01.85 Patentblatt 85/3**

(84) Benannte Vertragsstaaten:
**DE FR IT NL SE**

(71) Anmelder: **Bertrams AG**
**Aeschengraben 9**
**CH-4051 Basel(CH)**

(72) Erfinder: **Kühnlein, Hans**
**Hümpeliweg 20**
**CH-4414 Füllinsdorf(CH)**

(72) Erfinder: **Mildenberger, Hans-Jürgen**
**Uhlandstrasse 52**
**D-7880 Bad Säckingen(DE)**

(74) Vertreter: **Willi, Anton, J.**
**Alsenmattstrasse 2**
**CH-8800 Thalwil(CH)**

(54) **Verfahren und Einrichtung zum thermischen Beseitigen von salzhaltigen und organikabeladenen Flüssigkeiten, insbesondere Abwässern.**

(57) Die Rohflüssigkeit wird durch mehrstufiges Eindampfen (A) aufkonzentriert. Die dabei entstehenden Brüden werden thermisch oxidiert oder kondensiert. Das stark salzhaltige Konzentrat wird in einer Gas-Feststoff-Wirbelschicht (B) thermisch getrennt in feste anorganische Bestandteile (Salze und Feststoffe) und dampfförmige Organike und Wasserdampf, die mit dem fluidisierenden Gasstrom die Wirbelschicht verlassen. In der nachgeschalteten Verbrennungseinrichtung (C) werden die Organika bei Temperaturen $\geq$ 800°C thermisch oxidiert, wobei der Gasstrom, vorzugsweise Luft, den notwendigen Sauerstoff für die Verbrennung liefert. Die bei der Verbrennung freiwerdende Wärme kann zur Aufheizung des fluidisierenden Luftstroms und zur Eindampfung der Rohflüssigkeit genutzt werden.

EP 0 131 116 A1

./...

Fig.1

- 1 -

Bertrams AG · CH-4051 Basel

Verfahren und Einrichtung zum thermischen
Beseitigen von salzhaltigen und organikabeladenen Flüssigkeiten, insbesondere
Abwässern

---

Die Erfindung betrifft ein Verfahren und eine Einrichtung zum thermischen Beseitigen von salzhaltigen und organikabeladenen Flüssigkeiten, insbesondere
Abwässern.

Bei bekannten Verfahren zum Aufbereiten von salzhaltigen Abwässern, die mit organischen Schadstoffen beladen sind, werden die organischen Schadstoffe unter
Zufuhr von Stützbrennstoff verbrannt und die dabei
freiwerdende Wärme zur Aufkonzentrierung des Rohabwassers und zur Abtrennung der Feststoffe und Salze
aus dem Konzentrat ausgenutzt. Dieses Verfahren der
Hochtemperaturoxydation von verunreinigten Flüssigkeiten, insbesondere Abwässern, wird angewendet, wenn
andere biologische oder chemische Aufbereitungsverfahren aus verfahrenstechnischen oder wirtschaftlichen
Gründen ausscheiden.

Die Verbrennung von salzfreien Abwasserschlämmen oder
-konzentraten wird gewöhnlich in Wirbelschichtöfen
oder Oefen anderer Bauart bei Temperaturen zwischen
800°C und 1400°C durchgeführt. Dabei wird das restliche Wasser verdampft und die brennbaren Bestandteile
vollständig oxidiert. Die Verbrennung von salzhaltigen Schlämmen und Konzentraten in Oefen dieser Bauart
bringt verfahrenstechnische Probleme mit sich und ist
aus energetischer Sicht ungünstig. Die Ursache dieser
Probleme ist die im Vergleich zur Verbrennungstemperatur niedrige Schmelztemperatur der Salze, z.B. bei
Alkalimetallchloriden, und deren starke Neigung, niedrig schmelzende Eutektika zu bilden. Bei einer teilweisen oder vollständigen Verbrennung der Schadstoffe in einer Wirbelschicht besteht deshalb bei den
üblichen Verbrennungstemperaturen von 800 bis 900°C
die Gefahr des Sinterns und Verklebens der Salze und
des Zusammenbackens des Bettmaterials. Eine Verbrennung in der Wirbelschicht bei ca. 400°C mit einer
Nachverbrennung in dem darüberliegenden Raum löst
dieses Problem nicht, weil wegen der Wärmestrahlung
und des Feststoffaustauschs zwischen beiden Bereichen
eine saubere räumliche Trennung der beiden Verbrennungszonen nicht gegeben ist.

Brennkammern anderer Bauart gestatten dagegen die Verbrennung salzhaltiger Abwasserkonzentrate. Die in der
Brennzone bei 1200°C bis 1400°C verdampften Salze
fallen jedoch bei der Abkühlung der Rauchgase in den
Wärmerückgewinnungseinheiten als Aerosol oder Staub
aus und führen zu störenden Ablagerungen.

Das erfindungsgemässe Verfahren umgeht diese Schwierigkeiten, indem es eine räumliche Trennung der Feststoff- und Salzabscheidung von der thermischen Oxy-

- 3 -

dation der Organika ermöglicht.

Zu diesem Zweck ist das erfindungsgemässe Verfahren dadurch gekennzeichnet, dass die Rohflüssigkeit zu einem noch pumpfähigen Konzentrat mit einem möglichst hohen Feststoffgehalt eingedampft wird, wonach das Konzentrat in einer Gas-Feststoff-Wirbelschicht thermisch in feste anorganische Bestandteile und in dampfförmige Organika und Wasser enthaltende Bestandteile getrennt wird, wobei die festen Bestandteile, in granulierter Form, aus der Wirbelschicht ausgetragen werden, während die dampfförmigen Bestandteile mit dem fluidisierenden Gas einer thermischen Oxydation zugeführt werden.

Zweckmässig erfolgt das Eindampfen der Rohflüssigkeit, evtl. unter Vorschaltung einer Strippeinheit, mehrstufig, wobei die bei der thermischen Oxydation der dampfförmigen Organika anfallende Wärme sowohl zum Aufheizen des fluidisierenden Gasstroms der Wirbelschicht (zweckmässig Luft oder aber auch Rauchgas) als auch zum Eindampfen der Rohflüssigkeit verwendet werden kann. Die beim Eindampfen der Rohflüssigkeit entstehenden Brüden können entweder zusammen mit den dampfförmigen Organika aus der Wirbelschicht thermisch oxidiert oder kondensiert und z.B. einer biologischen Reinigung unterworfen werden. Die Betriebsbedingungen der Wirbelschicht, insbesondere deren Arbeitstemperaturen, können so eingestellt werden, dass einerseits ein ausreichender Abstand zum Sinterpunkt der Salzkristalle gewahrt ist und andererseits alle organischen Bestandteile zersetzt oder unzersetzt in die Gasphase überführt werden. Diese Forderungen werden von der Mehrzahl der Verunreinigungen in einem Temperaturbereich von 300 bis 500°C erfüllt. Bei der Bildung teerartiger kle-

- 4 -

bender organischer Rückstände muss die mittlere
Schichttemperatur auf 600 bis 650°C erhöht werden,
sofern die physikalischen Eigenschaften des Salzgemisches und die Zündpunkte der Organika dies erlauben. Ausserdem kann durch die Zugabe von inerten
Feststoffen die Fluidisierbarkeit derartiger Rückstände verbessert werden.

Die für diesen Trennprozess notwendige Energie kann
durch den Wärmeinhalt des fluidisierenden Gasstroms
zugeführt werden. Als Fluidisationsgas für die Abscheiderstufe kann sowohl Luft als auch Rauchgas eingesetzt werden.

Die ebenfalls Erfindungsgegenstand bildende Anlage
zur Durchführung des Verfahrens ist gekennzeichnet
durch eine Einrichtung zum Eindampfen der Rohflüssigkeit, deren Konzentratauslass an eine Gas/Feststoff-
Wirbelschichteinrichtung mit einer Feststoff-Austragvorrichtung angeschlossen ist, sowie durch eine Verbrennungseinrichtung, an welche der Abgasauslass der
Wirbelschichteinrichtung angeschlossen ist.

Die zweckmässig mehrstufige Eindampfeinrichtung wird
vorzugsweise unter Ausnützung der im Verbrennungsofen
anfallenden Wärme betrieben; analoges gilt für das
Aufheizen des in die Wirbelschicht eingeführten fluidisierenden Gases. Zum Betrieb der Wirbelschichteinrichtung und des Verbrennungsofens kann zusätzlich
Stützbrennstoff verwendet werden.

Im folgenden ist die Erfindung anhand der Zeichnung
beispielsweise näher erläutert. In der Zeichnung zeigen schematisch:

Fig. 1    Ein Beispiel einer der Abwasserbeseitigung
          dienenden Anlage zur Durchführung des erfindungsgemässen Verfahrens,

Fig. 2    Eine Variante der Verdampfungseinrichtung
          der Anlage nach Fig. 1,

Fig. 3    eine Variante der Salz- und Feststoffabtrennstufe und der Verbrennungsstufe der Anlage
          nach Fig. 1, und

Fig. 4    in grösserem Massstab eine Variante der Wirbelschichteinrichtung der Anlage nach Fig. 1.

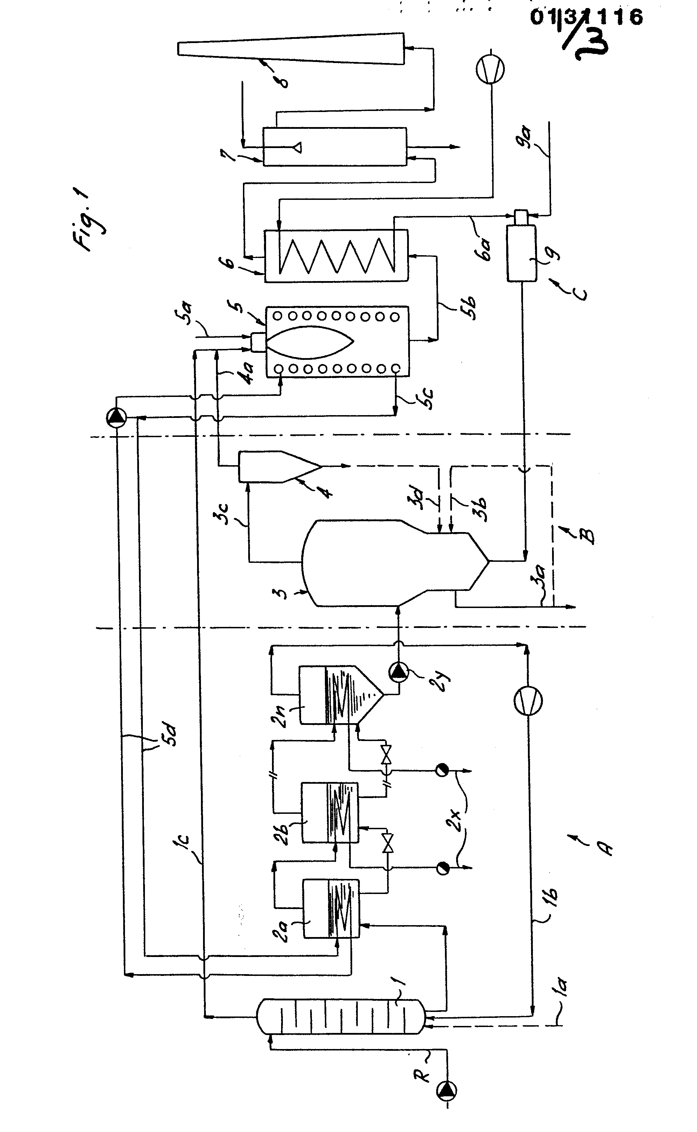

Die in Fig. 1 gezeigte Anlage zur thermischen Aufbereitung von salzhaltigen Abwässern, die mit organischen
Schadstoffen beladen sind, besitzt drei hintereinander geschaltete Einrichtungen, nämlich eine Verdampfungseinrichtung A, eine Salz- und Feststoffabtrenneinrichtung B und eine Verbrennungseinrichtung C.

Das Rohabwasser wird über Leitung R zunächst in die
Strippkolonne 1 geleitet, wo die leichtflüchtigen Organike wahlweise mit Luft (Leitung 1a) oder Brüdendampf (Leitung 1b) abgetrennt werden. Der aus der
Strippkolonne 1 abgezogene Abwasserstrom wird in eine
n-stufige (beim gezeichneten Beispiel sind drei Stufen gezeichnet) Verdampferanlage 2a,2b... 2n eingespeist. Die Brüden der einzelenen Stufen dienen zum
Beheizen der Nachbarstufen bzw. der Strippkolonne 1,
während das Kondensat der Brüden bei 2x abgeleitet
wird. Das in der letzten Stufe 2n anfallende Konzentrat wird über eine Pumpe 2y zur Salzabtrennung in
die Wirbelschicht einer Gas/Feststoff-Wirbelschichteinrichtung 3 geleitet. Die agglomerierten Salze wer-

- 6 -

den bei 3a aus der Wirbelschicht abgezogen, wobei je nach Fahrweise ein Anteil mit enger Korngrössenverteilung bei 3b wieder in die Wirbelschichteinrichtung 3 zurückgeführt wird. Der von dem fluidisierenden Gasstrom über Leitung 3c ausgetragene Feingutanteil wird in einer Abscheidevorrichtung 4, z.B. ein Zyklon, abgetrennt und bei 3d in die Wirbelschichteinrichtung 3 zurückgeführt. Der mit den dampfförmigen Schadstoffen beladene, die Abscheidevorrichtung 4 über die Leitung 4a verlassende Gasstrom wird zumsammen mit dem Dampfstrom aus der Strippkolonne 1 (Leitung 1c) zur Verbrennung in den Ofen 5 der Verbrennungseinrichtung C geleitet, wo die Schadstoffverbrennung unter Zufuhr von Brennstoff über Leitung 5a bei 800 bis $1400^{\circ}C$ durchgeführt wird. Die in den über Leitung 5b den Ofen 5 verlassenden Rauchgasen enthaltene Wärmeenergie wird im Luftvorwärmer 6 zur Aufheizung des Wirbelbettgases genutzt. In der nachgeschalteten Rauchgaswäschevorrichtung 7 erfolgt die Reinigung und weitere Abkühlung des Rauchgasstroms, bevor dieser in den Kamin 8 geleitet wird. Der im Luftvorwärmer 6 vorgewärmte Wirbelgasstrom (Leitung 6a) wird in der Brennkammer 9 je nach Zusammensetzung der abzuscheidenden Salze und Organika mittels durch die Leitung 9a zugeführtem Brennstoff auf 300 bis $650^{\circ}C$ erhitzt. Die Wandung des Ofens 5 wird durch einen in einer Rohrschlange 5c zirkulierenden Wärmeträgerstrom gekühlt; der Wärmeträger erreicht dabei Temperaturen von 150 bis $300^{\circ}C$. Die an den Wärmeträger übertragene Wärmeenergie kann, wie in Fig. 1 dargestellt, über die Leitung 5d zur Beheizung der ersten Verdampferstufe 2a genutzt werden.

Die Aufgabe der Eindampfstufen ist es, auf wirtschaftlichem Wege bei niedrigen Temperaturen einen möglichst grossen Anteil des Rohabwassers zu verdampfen, um den Energieverbrauch der nachfolgenden Verfahrensstufen, Salzabscheidung und Verbrennung, gering zu halten.

Die Eindampfung kann sowohl einstufig als auch mehrstufig, im Gleich- oder Gegenstrom, sowie unter Anwendung der Brüdenkompression durchgeführt werden. Die maximal erzielbare Salzkonzentration des Abwasserkonzentrats wird durch die verfahrenstechnischen Bedingungen der Verdampfungsapparate vorgegeben. Die Aufkonzentrierung des Rohabwassers soll aus Gründen der Energieeinsparung möglichst weit getrieben werden, wobei nach Möglichkeit ein Teil der gelösten Salze ausgefällt und das Konzentrat als Kristallbrei in die Salzabscheidung eingespeist werden kann. Die entstehenden Brüden enthalten leichterflüchtige Organika. Die Zusammensetzung und Konzentration dieser leichterflüchtigen Organika entscheiden darüber, ob die Brüden kondensiert und in eine biologische oder chemische Reinigungsstufe geleitet werden können oder thermisch oxidiert werden müssen. Im ersten Fall kann der Energieinhalt der Brüden zur Beheizung der benachbarten Verdampferstufen genutzt werden.

Enthält das Rohabwasser grössere Mengen an leichterflüchtigen Organika, z.B. Lösungsmittel, so können diese Anteile weitgehend durch Strippen mit Luft oder Dampf entfernt werden.

Für den Strippvorgang, die Rohabwasservorwärmung und die Eindampfung werden bekannte, technisch erprobte Apparate eingesetzt. Je nach Eindampfaufgabe liegt die Zahl der Verdampferstufen zwischen 1 und 6. Das Konzentrat aus der Eindampfung - es enthält hauptsächlich Salze und organische Schadstoffe (Anteil max. 50 bis 70 Gew.% TS) - kann unmittelbar zur Verbrennung in den Ofen 5 geleitet werden. Die Gasphasenoxidation der Schadstoffe erfolgt dort bei Temperaturen $\geq 800^{\circ}C$ (bis ca. 1400$^{\circ}$C), um alle organischen Schadstoffe zu verbrennen und im Rauchgas einen CO-Gehalt $\leq$ 500 ppm zu erzielen. Die ebenfalls in den Ofen 5 eingebrachten Salze werden in der Verbrennungszone verdampft und fallen bei der Abkühlung des Rauchgases als Aerosol oder feiner Salzstaub aus. Zur Einsparung des Primärenergieanteils zur Verdampfung der Salze und zur Vermeidung verfahrenstechnischer Probleme, die durch den Salzstaub in den nachgeschalteten Wärmerückgewinnungseinheiten entstehen, ist wie gezeigt, die Salz- und Feststoffabscheidestufe B der Verbrennungsstufe C vorgeschaltet.

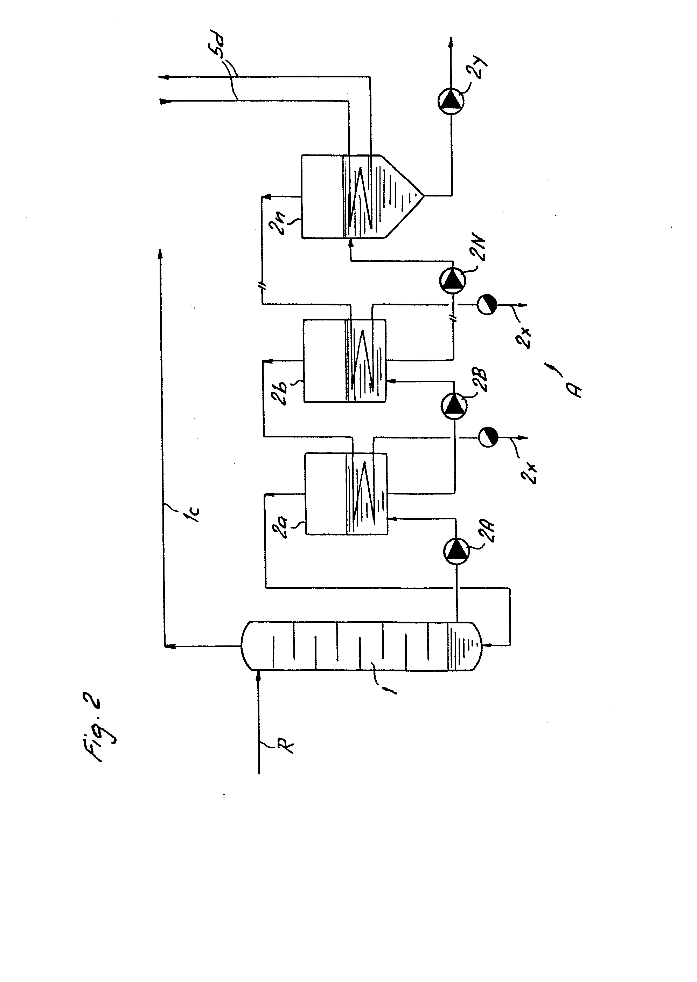

Fig. 2 zeigt eine Verdampfungseinrichtung A, die für das Eindampfen von Abwässern auf extrem hohe Feststoffkonzentrationen geeignet ist. Die Einrichtung besteht aus der Strippkolonne 1 zur Abtrennung leichtflüchtiger Komponenten und n Verdampferstufen (2a, 2b,... 2n) mit sogenannter Gegenstromschaltung. Das Rohabwasser wird zunächst in die Strippkolonne 1 geleitet, wo mit den Brüden der ersten Verdampferstufe 2a die leichterflüchtigen Bestandteile, z.B. organische Lösungsmittel etc., bei Temperaturen von ca. 80 bis 100$^{\circ}$C ausgetrieben werden. Die mit den Organika angereicherten Brüden werden entweder in eine separate Brüdenoxidation geleitet oder im Ofen verbrannt. Das aufkonzentrierte Abwasser wird durch die Pumpen 2A, 2B ... 2N von Stufe zu Stufe gefördert. Die in den einzelnen Verdampferstufen erzeugten Brüden dienen zur Beheizung der jeweils vorgeschalteten Verdampferstufe. Diese Betriebsweise setzt voraus, dass die Brüden nur geringe Anteile von biologisch oder chemisch leicht abbaubaren Schadstoffen enthalten. Die letzte Ver-

- 9 -

dampferstufe 2n dieser Schaltung wird mit dem im Verbrennungsofen (z.B. auf 100 bis 300°C) aufgeheizten Wärmeträger (Leitung 5d) beheizt. Diese Stufe 2n, die bei Temperaturen von ca. 110 bis 180°C betrieben wird, ist mit einer Abscheideeinheit versehen und ermöglicht über Pumpe 2y den Abzug eines extrem hoch eingedickten, feststoffhaltigen Konzentrats, das zur Entsorgung in die nachgeschalteten Verfahrensstufen (Salz-Abscheidung B, Verbrennung C) geleitet wird.

Der Vorteil dieser Schaltung besteht darin, dass die Konzentrattemperatur von Stufe zu Stufe erhöht wird und damit die Fliessfähigkeit des Konzentrats erhalten bleibt.

In dieser Verfahrensstufe werden die anorganischen Verunreinigungen des Verdampfer-Konzentrats von dem Restwasser und den organischen Schadstoffen getrennt. Diese thermische Trennung findet in einer Gas-Feststoff-Wirbelschicht statt. Bei den dort herrschenden Betriebsbedingungen werden die mit dem Konzentrat eingespeisten Organika teilweise zersetzt und in die Dampfphase überführt und das gesamte Restwasser verdampft. Der fluidisierende Gasstrom transportiert die dampfförmigen Komponenten aus der Wirbelschicht über einen Staubabscheider in einen Verbrennungsofen. Die im Konzentrat gelösten Salze kristallisieren während des Verdampfungsvorgangs aus und agglomerieren mit den fluidisierten Feststoffteilchen. Als Feststoff für die Wirbelschicht kann sowohl das Kristallisat hochschmelzender Salze als auch inerter Feststoff, z.B. Sand, eingesetzt werden. Das in der Wirbelschicht erzeugte Granulat wird kontinuierlich abgezogen und klassiert. Während ein Teilstrom des Feststoffs mit definierter Korngrösse wieder in das Bett zurückgeführt wird, gelangen die übrigen Feststoffe schadstoffrei auf eine Deponie. Der aus dem Staubabscheider in die Schicht zurückgeführte Feingutanteil dient als Sood (Keimkristalle) für den Abscheideprozess. Die Betriebsbedingungen der Wirbelschicht werden so eingestellt, dass einerseits ein ausreichender Abstand zum Sinterpunkt der Salzkristalle gewahrt ist und andererseits alle organischen Bestandteile zersetzt oder unzersetzt in die Gasphase überführt werden. Diese Forderungen werden von der Mehrzahl der Verunreinigungen in einem Temperaturbereich von 300 bis 500°C erfüllt. Bei der Bildung teerartiger klebender organischer Rückstände muss die mittlere Schichttemperatur auf 600 bis 650°C erhöht werden, sofern die physikalischen Eigenschaften des Salzgemisches und die Zündpunkte der Organika dies erlauben. Ausserdem kann durch die Zugabe von inerten Feststoffen die Fluidisierbarkeit derartiger Rückstände verbessert werden.

Die für diesen Temperaturbereich notwendige Energie kann durch den Wärmeinhalt des fluidisierenden Gasstroms zugeführt werden. Als Fluidisationsgas für die Abscheiderstufe kann sowohl Luft als auch Rauchgas eingesetzt werden. Einen anderen Teil der Trennenergie liefert die bei der Zersetzung und der teilweisen Oxidation der organischen Schadstoffe freiwerdende Reaktionswärme.

Gemäss Fig. 1 wird die zur Fluidisierung verwendete Luft zunächst im Luftvorwärmer 6 vorgeheizt und anschliessend in der Brennkammer 9 auf die erforderliche Eintrittstemperatur für die Wirbelschichteinrichtung 3 erhitzt. Diese Schaltung bietet den Vorteil, dass die Luft den notwendigen Sauerstoff für die Schadstoffverbrennung im Ofen 5 liefert und eine teilweise Oxidation leichtentzündlicher Schadstoffe bereits in der Wirbelschicht ermöglicht. Die maximal mögliche Schadstoffanreicherung der Luft in der Wirbelschicht ist durch die untere Zündgrenze der Schadstoffe bei der im Wirbelbett herrschenden Temperatur vorgegeben.

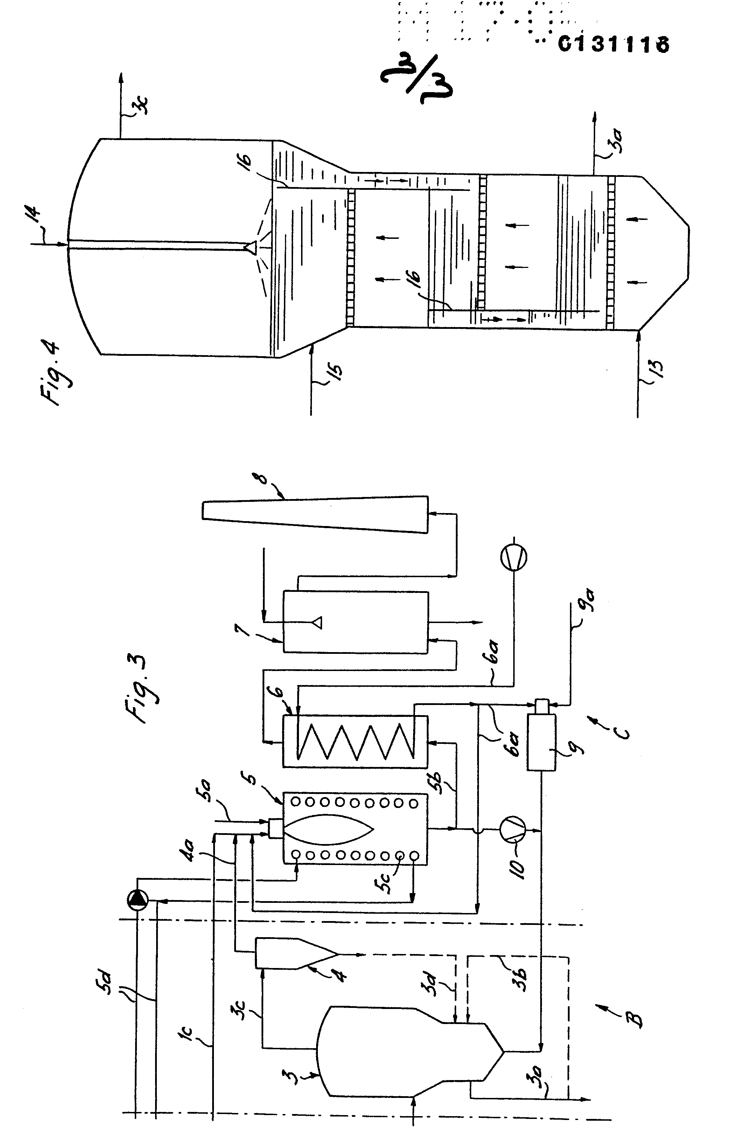

Die Verwendung von Rauchgasen als Wirbel- bzw. Fluidisationsgas ermöglicht - ähnlich wie der Einsatz inerter Gase - eine höhere Beladung mit leichtentzündlichen Schadstoffen. Bei der in Fig. 3 gezeigten Variante wird ein Teilstrom der aus dem Ofen 5 kommenden Rauchgase in der Verdichterstufe 10 auf den Arbeitsdruck der Wirbelschichteinrichtung verdichtet. Die Temperatur des Wirbelgases wird über die Brennkammer 9 eingestellt. Die höhere Schadstoffanreicherung ist besonders für den Einsatz einer mehrstufigen Wirbelschichteinrichtung zur Salz- und Feststoffabtrennung von Bedeutung. Der für die Verbrennung im Ofen 5 notwendige Sauerstoff wird bei dieser Variante separat zugeführt. Die Baugrösse von Luftvorwärmer 6 und Rauchgaswäschevorrichtung 7 ist gegenüber der in Fig. 1 gezeigten Anlage geringer. Der Einsatz des Rauchgases reduziert ausserdem den Gesamtenergiebedarf der Anlage. Die Verbrennung im Ofen 5 wird mit geringen Luftüberschusszahlen betrieben.

Eine mögliche Verfahrensvariante besteht darin, dass dem Wirbelschicht-Prozess zusätzlich Wärme über einen zirkulierenden Feststoffstrom zugeführt wird.

Dazu wird der Wirbelschicht ein Feststoffanteil entnommen und nach externer Aufheizung wieder kontinuierlich in die Schicht zurückgeführt. Diese externe Aufheizung kann in sogenannten "Gas-Feststoff-Gegenstromwärmeaustauschern" unter Ausnutzung des Wärmeinhaltes der Rauchgase erfolgen.

Eine weitere Variante der Salz- und Feststoffabtrennung ergibt sich durch den Einsatz von Feststoffen mit katalytischen Eigenschaften als Bettmaterial. Die Verwendung von Katalysatoren fördert die Zersetzung schwerflüchtiger organischer Verbindungen und die Oxydation der Zersetzungsprodukte zu thermisch stabileren Produkten, z.B. Aldehyden, Carbonsäuren oder CO.

Die katalytische Oxidation erfolgt grundsätzlich flammlos und eignet sich deshalb besonders zur Oxidation leicht entzündlicher, explosibler Gase und Dämpfe. Diese Verfahrensweise ist im Rahmen der Abwasserreinigung von Bedeutung, wenn - wie im vorliegenden Falle - die Salze mit niedrigen Schmelzpunkten abgetrennt werden müssen und dabei organische Zersetzungsprodukte mit niedrigen Zündpunkten entstehen bzw. deren Konzentration im Wirbelgas die untere Zündgrenze überschreitet. Hier bewirkt die Zugabe von Feststoffen, die katalytische Eigenschaften für Crack- und Oxidationsreaktionen besitzen, eine deutliche Absenkung der erforderlichen Arbeitstemperaturen und eine Verringerung der notwendigen Verweilzeit. Die Reaktion Schadstoff-Luftsauerstoff kann unter dem Einfluss des Katalysators bereits bei 150 bis 350°C einsetzen. Normalerweise werden aber erst im Temperaturbereich von 300 bis 500°C deutliche Umsätze erzielt. Der relativ geringe

- 13 -

Schadstoffanteil verhindert eine übermässige Wärmeentwicklung im Wirbelbett. Die intensive Durchmischung
des Feststoffs verhindert ausserdem die örtliche
Ueberhitzung des Feststoffs im Bett. Die verringerte
Arbeitstemperatur erfordert einen geringeren Energiebedarf für die Salzabtrennung und führt zu einer
Reduzierung der Apparatekosten.

Für die heterogen katalysierte Gasphasenoxidation
sind verschiedene Katalysatorgruppen aktiv:

1. Edelmetall-Katalysatoren, z.B. Pt, Ag und Pd/Rh-
   Träger,
2. Mischoxidkatalysatoren, z.B. aus Mischoxiden
   der Gruppe Cu, Cr, Fe, Co, Ni,
3. feste Säuren und Basen, z.B. $Al_2O_3$.

Die grosse austauschaktive Oberfläche der Wirbelschicht erlaubt den Einsatz von Katalysatoren mit
geringer Aktivität, wie z.B. $Al_2O_3$. Die Salzabscheidung an der Katalysatorenoberfläche in Verbindung
mit der Bildung von Salzagglomeraten vermindert die
Aktivität des Katalysators mit zunehmender Einsatzdauer. Ein kontinuierliches Auswechseln und Aufbereiten des Katalysators wird daher erforderlich.

Eine weitere Verfahrensvariante der Salzabscheidung
wurde für Salzlösungen entwickelt, deren organische
Verunreinigungen erst bei höheren Temperaturen verdampfen oder durch Zersetzung in leichtflüchtige Bestandteile überführt werden können. Für die Salzabscheidung aus diesen Lösungen wurde eine mehrstufige
Wirbelschichteinrichtung gemäss Fig. 4 entwickelt.
Der Vorteil gegenüber einem einstufigen Wirbelschicht-

- 14 -

Salzabscheider besteht hauptsächlich in der Verwirklichung des Gegenstroms "Gas-Feststoff".

Das bei 13 zugeführte fluidisierende Gas durchströmt von unten nach oben die aus mehreren Stufen bestehende Kolonne und liefert die notwendige Wärme zur Verdampfung des Wassers und Zersetzung der Organika aus dem bei 14 zugeführten Konzentrat. Dabei kühlt sich das Gas von Stufe zu Stufe ab und nimmt die verdampfte Restfeuchte und die leichtflüchtigen organischen Zersetzungsprodukte auf. Das im Gegenstrom dazu bei 15 zugeführte Feststoffgemisch kann entweder durch Ueberlaufrohre (bei 16 angedeutet) von Stufe zu Stufe gefördert werden, oder es werden sogenannte Rieselböden oder "Dual-Flow"-Böden eingesetzt. Die Oeffnungen dieser Böden sind so dimensioniert, dass sowohl das Gas als auch der Feststoff hindurchtreten kann. Diese Bauform macht die Ueberlaufrohre überflüssig.

Der Gegenstrom "Gas-Feststoff" führt wegen des mehrfachen Wärme- und Stoffübergangs zu einer Verringerung des Gasbedarfs. Ausserdem lässt sich bei dieser Art des Phasenkontakts ein enges Verweilzeitspektrum sowohl für das Gas als auch für den Feststoff erzielen. Speziell für die Salzabscheidung ist noch ein weiterer Effekt von Vorteil: die leichterflüchtigen und zum Teil auch leichterentzündlichen Bestandteile werden bereits in den oberen Stufen bei niedrigen Temperaturen in die Gasphase überführt und aus dem Apparat ausgetragen. Die mit schwerer zersetzbaren Schadstoffen verunreinigten Salze werden auf den unteren Böden bei höheren Temperaturen weiter geröstet und können am unteren Ende der Kolonne frei von organischen Schadstoffen abgezogen werden.

Der Vorteil dieser Abscheiderstufe besteht darin, dass es gelingt, die Salze einerseits vom Ofen fernzuhalten und diese andererseits trocken, granuliert und in deponiefähiger Form aus dem Prozess auszuschleusen.

Die schadstoffhaltigen Stripgase und die Prozessabwasserbrüden bzw. Prozessabwasserkonzentrate werden, wie erwähnt, zusammen mit dem schadstoffbeladenen Gas aus der Wirbelschicht und anderen, nicht kondensierbaren aus der Anlage austretenden Gasen im Verbrennungsofen 5 bei Temperaturen $\geq 800^{\circ}C$ thermisch oxidiert und vollständig zersetzt.

Die Wände des Verbrennungsraums werden mittels der Wärmeträgerflüssigkeit gekühlt. Belastungsunabhängig wird die Wandtemperatur innerhalb enger Grenzen konstant gehalten, wodurch Korrosion vermieden wird. Die Ueberschuss-Wärme wird abgeführt und wird innerhalb der Anlage wieder verwendet (z.B. zum Eindampfen des Rohabwassers). Die Brüden der Eindampfung und das beladene Gas aus der Feststoff-Abtrennung bzw. die organischen Rückstände werden direkt ins heisseste Zentrum der Flamme eingedüst. Eine ausreichend dimensionierte Brennkammer ergibt lange Verweilzeiten, so dass die totale Oxidation der Schadstoffe sichergestellt ist. Geruchsprobleme werden dank diesem Konzept mit Sicherheit auch eliminiert. Die Verbrennungsrückstände sind organikafrei.

Die Abmessungen des Ofens und des Wärmetauschers (Luftvorwärmers) können gering gehalten werden, weil eine Verschmutzung durch Salze und Feststoffe vermieden wird.

Die in den Verbrennungsgasen enthaltene Wärmeenergie wird im Wärmetauscher zurückgewonnen, wobei die Rauchgase abgekühlt werden, so dass sie, falls notwendig, direkt in die nachfolgende Rauchgaswäsche geleitet werden können. Durch geeignete Formgebung, Betriebstemperaturen und Materialwahl wird die Ablagerung von Flugpartikeln und Korrosion vermieden. Die Verbrennungsrückstände (Russ etc.) sind organikafrei. Für die wenig feststoffbeladenen Rauchgase werden kompakte Wärmetauscher eingesetzt, die ebenfalls mit speziellen Reinigungseinrichtungen, z.B. Russbläsern, ausgestattet werden können.

Eine Rauchgasreinigung entfernt unter Verwendung individueller Stufen alle gasförmigen Schadstoffe sowie sämtliche Feststoffe, z.B. eventuell enthaltenen Feinstaub und Aerosole. Hohe Abscheideleistungen werden mit niedrigem Energieaufwand erreicht. Das Waschwasser ist neutral und organikafrei.

- 1 -

PATENTANSPRUECHE

1. Verfahren zum thermischen Beseitigen von salzhaltigen und organikabeladenen Flüssigkeiten, insbesondere Abwässern, dadurch gekennzeichnet, dass die Rohflüssigkeit zu einem noch pumpfähigen Konzentrat eingedampft wird, wonach das Konzentrat in einer Gas-Feststoff-Wirbelschicht thermisch in feste anorganische Bestandteile und in dampfförmige Organika und Wasser enthaltende Bestandteile getrennt wird, wobei die festen Bestandteile, in granulierter Form, aus der Wirbelschicht ausgetragen werden, während die dampfförmigen Bestandteile mit dem fluidisierenden Gas einer thermischen Oxydation zugeführt werden.

2. Verfahren nach Anspruch 1, dadurch gekennzeichnet, dass die Rohflüssigkeit mittels Luft und/oder Brüden gestrippt wird, bevor sie einer mehrstufigen Eindampfung unterworfen wird, wobei wenigstens eine der Verdampferstufen mit der bei der thermischen Oxydation anfallender Wärme beheizt wird, während die übrigen Verdampferstufen mit Brüden einer benachbarten Stufe beheizt werden.

3. Verfahren nach Anspruch 1, dadurch gekennzeichnet, dass die Rohflüssigkeit mittels Brüden gestrippt wird, die aus dem Brüdenstrom der nachfolgenden Eindampfung entnommen werden, wobei der restliche Brüdenstrom der thermischen Oxydation zugeführt wird, welche die zum Eindampfen erforderliche Wärme liefert.

4. Verfahren nach einem der Ansprüche 1 bis 3, dadurch gekennzeichnet, dass die Rohflüssigkeit auf einen Trockensubstanzgehalt von max. 50 bis 70 Gew.% eingedampft wird, wobei das Konzentrat in der Gas-Feststoffwirbelschicht bei Temperaturen von wenigstens 250°C und höchstens 650°C in feste und dampfförmige Bestandteile getrennt wird, während anschliessend die Organika bei Temperaturen $\geq 800°C$ verbrannt werden und die fühlbare Wärme der Rauchgase zum Eindampfen der Rohflüssigkeit und zum Aufheizen des fluidisierenden Gases der Wirbelschicht genutzt wird.

5. Anlage zur Durchführung des Verfahrens nach Anspruch 1, gekennzeichnet durch eine Einrichtung (A) zum Eindampfen der Rohflüssigkeit, deren Konzentratauslass an eine Gas/Feststoff-Wirbelschichteinrichtung (B) mit einer Feststoff-Austragvorrichtung angeschlossen ist, sowie durch eine Verbrennungseinrichtung (C), an welche der Abgasauslass der Wirbelschichteinrichtung angeschlossen ist.

6. Anlage nach Anspruch 5, dadurchgekennzeichnet, dass einer Mehrzahl von Verdampferstufen (2a,2b, ... 2n) der Eindampfeinrichtung (A) eine Strippkolonne (19 vorgeschaltet ist.

7. Anlage nach Anspruch 6, dadurch gekennzeichnet, dass der Brüdenauslass der ersten Verdampferstufe (2a) an die Strippkolonne (1) angeschlossen ist, wobei die Brüdenauslässe der übrigen Stufen (2b .... 2n) jeweils an die vorangehende Stufe zu deren Beheizung angeschlossen sind, während die letzte Verdampferstufe (2n) an eine vom Ofen (5)

- 3 -

der Verbrennungseinrichtung (C) kommende Wärmeträgerleitung (5d) angeschlossen ist.

8. Anlage nach Anspruch 6 oder 7, dadurch gekennzeichnet, dass die Wirbelschichteinrichtung mehrstufig
ausgebildet ist.

Fig.1

Fig. 2

Fig.4

Fig.3

**0131116**
Nummer der Anmeldung

**Europäisches Patentamt**

# EUROPÄISCHER RECHERCHENBERICHT

EP  84 10 5612

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | FR-A-2 351 912  (VON ROLL) <br> * Seite 3, Zeile 22 - Seite 5, Zeile 20 * | 1-8 | C 02 F    1/04 |
| A | FR-A-2 229 654  (HCH. BERTRAMS AG.) <br> * Seite 8, Zeile 6 - Seite 9, Zeile 35 * | 1-8 | |
| A | FR-A-2 312 459  (LUWA AG.) <br> * Seite 9, Zeile 1 - Seite 10, Zeile 36 * | 1-8 | |
| A | FR-A-2 354 974  (HCH. BERTRAMS AG.) <br> * Seiten 12-14 * | 1-8 | |

RECHERCHIERTE SACHGEBIETE (Int. Cl. 3)

C 02 F

Der vorliegende Recherchenbericht wurde für alle Patentansprüche erstellt.

| Recherchenort | Abschlußdatum der Recherche | Prüfer |
|---|---|---|
| DEN HAAG | 03-10-1984 | VAN AKOLEYEN H.T.M. |